(19) **Europäisches Patentamt**

**European Patent Office**

**Office européen des brevets**

(11) **EP 0 878 934 B1**

(12) **FASCICULE DE BREVET EUROPEEN**

(45) Date de publication et mention
de la délivrance du brevet:
**03.11.2004   Bulletin 2004/45**

(51) Int Cl.⁷: **H04L 9/32**

(21) Numéro de dépôt: **98401120.5**

(22) Date de dépôt: **11.05.1998**

(54) **Procédé d'identification à clé publique utilisant deux fonctions de hachage**

Identifizierungsverfahren mit öffentlichem Schlüssel unter Verwendung zweier Hash-Funktionen

Public key identification method using two hash functions

(84) Etats contractants désignés:
**DE GB**

(30) Priorité:  **13.05.1997  FR 9705830**

(43) Date de publication de la demande:
**18.11.1998   Bulletin 1998/47**

(73) Titulaire: **FRANCE TELECOM**
**75015 Paris (FR)**

(72) Inventeurs:
  • **Arditti, David**
    **92140 Clamart (FR)**
  • **Gilbert, Henri**
    **91440 Bures sur Yvette (FR)**
  • **Stern, Jacques**
    **75005 Paris (FR)**
  • **Pointcheval, David**
    **94230 Cachan (FR)**

(74) Mandataire: **Poulin, Gérard et al**
    **BREVALEX**
    **3, rue du Docteur Lancereaux**
    **75008 Paris (FR)**

(56) Documents cités:
    **EP-A- 0 311 470**

**Description**

**Domaine technique**

La présente invention se rapporte à un procédé cryptographique d'identification permettant à un support quelconque, appelé module d'identité (par exemple une carte à mémoire, un microprocesseur, un ordinateur, etc), de prouver son identité à des moyens mettant en oeuvre une application, ou à un interlocuteur doté de moyens de vérification, et ceci grâce à un protocole mettant en jeu, sans les révéler, un ou des secret(s) contenu(s) dans le support.

Un protocole d'identification est donc un dialogue, à travers un réseau de télécommunications, entre deux entités : d'une part, une première entité qui veut prouver son identité et qui peut être, le cas échéant, équipée d'un terminal, (par exemple un ordinateur doté d'un lecteur de cartes à mémoire) et, d'autre part, une seconde entité capable de dialoguer avec la première et de réaliser certains calculs de vérification.

La première entité, dont on veut vérifier l'identité, sera appelée par la suite "le vérifié" (en anglais "the prover") et la seconde "le vérificateur" (en anglais "the verifier").

La présente invention se rapporte plus particulièrement à un procédé d'identification à clé publique, dans lequel le vérificateur n'a pas besoin de connaître les secrets contenus dans le module d'identité du vérifié, mais seulement des données non confidentielles (la clé publique) pour effectuer les calculs de vérification.

L'algorithme de chiffrement a clé publique dit RSA (des initiales de leurs auteurs RIVEST, SHAMIR, ADLEMAN) est décrit dans le brevet américain US-A-4,405,829. C'est actuellement l'algorithme à clé publique le plus utilisé. Il fournit des schémas de signature utilisables également à des fins d'identification.

Dans l'algorithme RSA, on choisit deux nombres premiers distincts p et q, et on forme leur produit n. On choisit également un entier e, qui est premier avec le plus petit commun multiple de (p-1) et (q-1) (ou, si l'on veut, qui est premier avec le produit (p-1) (q-1)). Pour chiffrer un message, préalablement mis sous forme numérique u, u étant compris entre 0 et n-1, on calcule la puissance e-ième de u dans l'anneau des entiers modulo n, soit $v = u^e \bmod n$. On rappelle que la valeur d'un entier x modulo un entier n est égale au reste de la division de x par n.

Pour déchiffrer un message tel que v, il faut extraire la racine e-ième du message chiffré v dans l'anneau des entiers modulo n. On montre que cette opération revient à élever le nombre v à la puissance d, d étant l'inverse de l'exposant e modulo le plus petit commun multiple des nombres (p-1) et (q-1). Si l'on ne connaît pas les facteurs premiers p et q, la détermination de d est impossible et, avec elle, l'opération de déchiffrement.

L'une des premières utilisations pratiques du procédé RSA à des fins d'identification a été la suivante : une autorité, responsable de la mise en place d'un système d'identification, émet une clé publique de type RSA, c'est-à-dire, en pratique, les deux nombres n et e, cette clé étant commune à tout le système, et conserve les éléments secrets correspondants (p et q). Cette autorité dépose, dans chaque module d'identité des usagers du système, le couple constitué par :

- le numéro d'identification ID du module d'identité ;
- la racine e-ième (ou l'inverse de la racine e-ième), modulo n, d'un nombre obtenu à partir du numéro ID en appliquant à ID une fonction de redondance connue de tous (dont un exemple peut être trouvé dans la norme ISO 9796). Cette racine e-ième (ou son inverse), calculée par l'autorité d'émission à l'aide des éléments secrets qu'elle détient, est appelée "accréditation".

Les accréditations déposées dans les modules d'identité peuvent, en premier lieu, être utilisées à des fins d'identification passive (c'est-à-dire ne nécessitant aucun calcul de la part de celui qui veut prouver son identité). Le protocole se réduit alors, pour le vérificateur, aux opérations suivantes :

- lire le couple identité-accréditation contenu dans un module d'identité ;
- calculer la puissance e-ième de l'accréditation et s'assurer que le résultat de ce calcul et l'application de la fonction de redondance au numéro d'identification ID fournissent bien le même résultat.

Un telle identification passive montre au vérificateur que celui qui veut prouver son identité dispose de données qui ne peuvent avoir été émises que par l'autorité, ce qui limite, dans une certaine mesure, les usurpations d'identité. Mais rien n'interdit cependant à un pirate capable d'intercepter le protocole vérifié-vérificateur, ou à un vérificateur malhonnête, de réutiliser à son profit les données communiquées par le vérifié.

Malgré ce risque de fraude par réutilisation, l'identification passive décrite ci-dessus est largement utilisée dans le domaine bancaire et celui des cartes de télécommunication. Des précautions supplémentaires (listes noires, etc.) limitent dans une certaine mesure l'ampleur des fraudes par réutilisation.

Cependant, pour résoudre le problème de la fraude par réutilisation des données échangées, problème inhérent aux protocoles d'identification passifs, des protocoles d'identification actifs, c'est-à-dire nécessitant des calculs de la part de celui qui veut prouver son identité, ont été proposés. Parmi ces protocoles figurent non seulement l'utilisation de l'algorithme RSA pour signer une question aléatoire posée par le vérificateur, mais encore des schémas interactifs où le vérifié démontre au vérificateur qu'il possède une ou plusieurs accréditations du type de celles définies plus haut, et cela sans révéler cette (ou ces) accréditation (s). Parmi les schémas de ce type, les plus utilisés actuellement sont le schéma de FIAT-SHAMIR et le schéma de GUILLOU-QUISQUATER.

Le schéma d'identification de FIAT-SHAMIR est décrit dans le brevet US-A-4,748,668. Le schéma d'identification de GUILLOU et QUISQUATER est décrit dans le document FR-A-2 620 248 (ou son correspondant européen EP-A-0 311 470 ou son correspondant américain US-A-5,218,637).

Ces deux schémas consistent en une ou plusieurs itérations d'une variante de base à trois passes dans laquelle :

> 1. celui qui veut prouver son identité, (le vérifié) calcule la puissance e-ième modulo n d'un nombre aléatoire r qu'il a tiré, et en déduit un nombre x, appelé le témoin, qu'il envoie au vérificateur ;
> 2. le vérificateur tire au sort un nombre b, appelé la question, et l'envoie au vérifié ;
> 3. le vérifié calcule, par exemple, le produit du nombre aléatoire r par la puissance b-ième de son accréditation, soit $y = rS^b$ mod n et envoie le résultat y au vérificateur. Le vérificateur peut calculer la puissance e-ième de y, et comme il connaît la puissance e-ième de l'accréditation S du vérifié, il est alors capable de vérifier la cohérence entre x, b et y.

Ces schémas présentent un double avantage pour l'identification active : d'une part, si l'on se contente d'un niveau d'insécurité (défini comme la probabilité maximale de succès d'un fraudeur) de l'ordre de $10^{-6}$, ils sont nettement moins coûteux en temps de calcul qu'une signature RSA ; d'autre part, ces schémas sont, du moins dans leur version de base, à divulgation nulle de connaissance (en anglais "zero-knowledge"), ce qui entraîne que les échanges liés à un processus d'identification ne peuvent être d'aucun secours à un fraudeur pour la recherche des accréditations secrètes d'un utilisateur.

Deux configurations peuvent être envisagées pour la mise en oeuvre, côté vérifié, de schémas d'identification actifs démontrant la possession d'accréditations du type de ceux qui viennent d'être exposés. Dans une première configuration, le module d'identité contenant les accréditations possède une puissance de calcul suffisante pour réaliser tous les calculs de son côté. Dans une seconde configuration le module d'identité contenant les accréditations n'effectue pas les calculs lui-même mais les fait réaliser dans un terminal (par exemple un micro-ordinateur capable de lire les accréditations dans le module d'identité).

La seconde configuration, bien qu'un peu moins sûre que la première, peut cependant être utile pour améliorer la sécurité de la vérification de modules d'identité initialement conçus pour une simple identification passive. Il est nécessaire de faire confiance au terminal utilisé côté vérifié, mais sous réserve que ce terminal soit intègre, aucune fraude provenant du réseau ou du vérificateur n'est possible.

Dans la présente invention, on s'intéresse plus particulièrement au problème de l'utilisation, selon la seconde configuration, de supports d'identité initialement conçus pour une identification passive, dans lesquels une unique accréditation correspondant à un exposant public e égal à 3 a été déposée : la majeure partie des cartes bancaires françaises, ainsi que d'autres supports d'identité (par exemple les cartes de télécommunications) sont de ce type.

Le procédé de GUILLOU- QUISQUATER est en théorie utilisable par le terminal côté vérifié, pour démontrer au vérificateur la possession de l'accréditation. Le procédé de GUILLOU-QUISQUATER, dans ce cas particulier, comprend les opérations suivantes :

> a) deux grands nombres premiers p et q définissent l'entier n, produit de p par q ; le nombre n est rendu public ;
> b) le support de celui qui doit prouver son identité contient une accréditation secrète S comprise entre 1 et n-1 ; le cube de l'accréditation modulo n, c'est-à-dire $I = S^3$ mod n, est rendu public ;
> c) le support du vérifié est pourvu de moyens aptes à tirer au hasard un entier r compris entre 1 et n-1, et à calculer le cube de r modulo n, appelé le témoin x :

$$x = r^3 \text{ mod } n \text{ ;}$$

> d) le vérifié transmet le témoin x au vérificateur ;
> e) le vérificateur tire au sort un entier b inférieur à l'exposant 3, donc égal à 0, 1, ou 2 ; cet entier est appelé la question ;
> f) le vérificateur transmet la question b au vérifié ;
> g) le vérifié calcule le nombre y défini par :

$$y = rS^b \bmod n$$

h) le vérifié transmet ce nombre y au vérificateur ;

i) le vérificateur élève au cube le nombre y et, par ailleurs, calcule le produit du témoin x (qui lui a été transmis) par la puissance b de I (b qu'il a tiré et I qui est public) ; le vérificateur compare alors $y^3$ et $xI^b \bmod n$. S'il y a coïncidence, le vérifié a répondu correctement à la question et son authenticité est présumée.

La sécurité d'un tel schéma repose sur l'hypothèse même du schéma RSA : l'entier n étant public ainsi que l'exposant 3, il est difficile, pour un tiers fraudeur, de remonter à r en prenant la racine cubique de x, sans connaître les facteurs p et q, dont n est le produit. Ne connaissant pas r, le tiers fraudeur ne peut répondre correctement à la question posée par le vérificateur.

Pour un tel procédé, ainsi que pour les autres schémas d'identification connus à ce jour, la situation où l'on ne dispose que d'une seule accréditation correspondant à un exposant public égal à 3 conduit à des protocoles très coûteux en communications. En effet, le niveau de sécurité d'un échange de base (témoin, question, réponse) que l'on peut réaliser dans les conditions citées est inférieur ou égal à 3 pour le schéma de GUILLOU- QUISQUATER. Pour parvenir à un niveau de sécurité convenable (insécurité inférieure à $2^{-16}$), il faut donc répéter l'échange de base au moins une dizaine de fois, ce qui conduit à multiplier le nombre de bits à échanger entre vérifié et vérificateur par un facteur de dix au moins.

Le but de la présente invention est justement de remédier à cet inconvénient. Il s'agit de proposer un schéma, à la fois réaliste en temps de calcul et moins coûteux en nombre de bits échangés, permettant de démontrer la possession d'une accréditation correspondant à un exposant public égal à 3, sans la révéler.

**Exposé de l'invention**

Le procédé de l'invention est fondé sur l'hypothèse de sécurité classique suivante, dite hypothèse de Diffie et Hellman : étant donné un entier n de taille suffisante, un entier g inférieur à n, et deux puissances entières de g modulo n notées $g^\alpha \bmod n$ et $g^\beta \bmod n$, il est difficile de calculer $g^{\alpha\beta} \bmod n$ sans connaître $\alpha$ ni $\beta$.

Sous cette hypothèse, l'invention se définit comme suit : il s'agit d'un procédé d'identification d'un support, appelé "le vérifié", par des moyens appelés "le vérificateur", ce support et ces moyens étant équipés de moyens de calcul et de mémorisation appropriés, le vérifié et le vérificateur possédant en commun :

- un premier nombre entier n, produit de deux nombres premiers (p,q),
- un second nombre entier g compris entre 0 et n-1 et d'ordre k élevé (l'ordre k étant défini comme étant le plus petit des nombres tels que $g^k = 1 \bmod n$),
- un paramètre m, déterminant l'intervalle [0, m-1] dans lequel sont tirés les exposants aléatoires,
- une première et une seconde fonctions de hachage distinctes l'une de l'autre notées $H_1$, $H_2$ indépendantes l'une de l'autre,

le vérifié possédant en outre un nombre secret S égal à la racine cubique modulo n d'un nombre I déduit de son identité, le nombre S vérifiant donc : $S^3 = I \bmod n$,

procédé dans lequel le vérifié et le vérificateur mettent en oeuvre leurs moyens de calcul et de mémorisation pour effectuer les opérations successives suivantes :

Phase A ; le vérifié :

Aa) tire au hasard un premier exposant $\alpha$ entier compris entre 0 et m-1,
Ab) calcule un nombre r égal à la puissance $\alpha$ du nombre g modulo n, soit

$$r = g^\alpha \bmod n$$

Ac) calcule un nombre R égal au cube de r modulo n, soit :

$$R = r^3 \bmod n = g^{3\alpha} \bmod n,$$

Ad) transmet le nombre R au vérificateur,

Phase B ; le vérificateur :

Ba) tire au hasard un second exposant $\beta$ entier compris entre 0 et m-1,
Bb) calcule un nombre t égal à la puissance $\beta$ de g modulo n, soit :

$$t = g^{\beta} \bmod n,$$

Bc) calcule un nombre T égal au cube de t modulo n, soit

$$T = t^{3} \bmod n = g^{3\beta} \bmod n,$$

Bd) calcule un nombre Z égal à la puissance $\beta$ de R modulo n, soit

$$Z = R^{\beta} \bmod n,$$

Be) applique la première fonction de hachage $H_1$ à Z pour obtenir un nombre h :

$$h = H_1(Z),$$

Bf) transmet au vérifié les nombres T et h,

Phase C ; le vérifié :

Ca) calcule un nombre Y égal à la puissance $\alpha$ du nombre T modulo n, soit :

$$Y = T^{\alpha} \bmod n,$$

Cb) applique au nombre Y la première fonction de hachage $H_1$ et obtient le résultat $H_1(Y)$ et vérifie si ce résultat est égal au nombre h reçu du vérificateur,
Cc) applique au nombre Y la seconde fonction de hachage $H_2$ pour obtenir un résultat H :

$$H = H_2(Y),$$

Cd) calcule un nombre z égal au produit du nombre r par le secret S modulo n, soit :

$$z = rS \bmod n,$$

Ce) transmet au vérificateur les nombres z et H,

Phase D ; le vérificateur :

Da) applique au nombre Z la seconde fonction de hachage $H_2$ et vérifie si le résultat obtenu $H_2(Z)$ est égal au nombre H qu'il a reçu du vérifié,
Db) calcule, d'une part, le produit de R par I modulo n et, d'autre part, le cube de z modulo n et vérifie si les deux résultats sont égaux,

l'identification du vérifié par le vérificateur étant acquise si les trois vérifications Cb) Da) Db) sont avérées.

Le paramètre m, que le vérifié et le vérificateur possédent en commun pourra être choisi du même ordre de grandeur que k, ou encore égal à n. La valeur de m ne devra pas révéler celle de k, qui n'a pas à être connue ni du vérifié ni du vérificateur.

Le tableau ci-après résume les différentes opérations.

La bande horizontale marquée 0 indique les données connues des deux entités, à savoir d'une part, le nombre n, le nombre g, et le cube du secret soit I et, d'autre part, les deux fonctions de hachage $H_1$ et $H_2$.

## TABLEAU I

| | Vérifié | Vérificateur |
|---|---|---|
| 0 | $n, \ g, \ I$ <br> $H_1, \ H_2$ | $n, \ g, \ I$ <br> $H_1, \ H_2$ |
| A | $\alpha < m$ <br><br> $r = g^{\alpha} \bmod n$ <br> $R = r^3 = g^{3\alpha} \bmod n \qquad \xrightarrow{\ R\ }$ | |
| B | $\beta < m$ <br><br><br><br> $\xleftarrow{\ T,h\ }$ | $t = g^{\beta} \bmod n$ <br> $T = t^3 = g^{3\beta} \bmod n$ <br> $Z = R^{\beta} \bmod n$ <br> $h = H_1(Z)$ |
| C | $Y = T^{\alpha} \bmod n$ <br> $h \overset{?}{=} H_1(Y)$ <br> $H = H_2(Y)$ <br> $z = rS \bmod n \qquad \xrightarrow{\ z,H\ }$ | |
| D | $H \overset{?}{=} H_2(Z)$ | $z^3 \overset{?}{=} R\bar{I} \bmod n$ |

La bande horizontale A rassemble les premières opérations effectuées par le vérifié (opérations Aa à Ad dans la définition qui précède).

La bande horizontale B rassemble les opérations suivantes effectuées par le vérificateur (opérations Ba à Bf).

La bande horizontale C rassemble les opérations effectuées à nouveau par le vérifié (opérations Ca à Ce).

La bande horizontale D, enfin, rassemble les deux dernières opérations effectuées par le vérificateur.

Un tel procédé permet bien de vérifier l'authenticité d'un possesseur d'accréditation. En effet, si le vérifié connaît le secret S, il pourra répondre correctement aux questions posées par le vérificateur, puisqu'il pourra calculer la quantité $z = rS \bmod n$.

Réciproquement, pour être accepté, le vérifié doit faire en sorte que l'égalité $H = H_2(Z)$ soit satisfaite et, pour cela, après avoir envoyé R au vérificateur et reçu $T = g^{3\beta} \bmod n$, il doit être capable de fournir un nombre H tel que $H = H_2(R^{\beta})$ :

1. soit H n'est pas calculé à l'aide de la fonction de hachage $H_2$ ; alors, en admettant que $H_2$ peut être modélisée comme une fonction aléatoire, la probabilité que la relation $H = H_2(R^{\beta})$ soit satisfaite, est négligeable ;

2. soit H est le résultat de $H_2$ sur une valeur Y; alors (à moins d'avoir obtenu une collision de $H_2$) Y est égal à Z. Dans ce cas, à partir de $T = g^{3\beta}$, le vérifié est capable de calculer $T^{\alpha} = g^{3\alpha\beta}$ ; alors, d'après l'hypothèse de départ, c'est qu'il connaît $\alpha$ tel que R = $g^{3\alpha}$ mod n.

Par ailleurs, le vérifié doit fournir un nombre z tel que la relation $z^3$ = RI mod n soit satisfaite. Pour cela, il doit fournir une racine cubique de RI. Comme RI = $g^{3\alpha}$ I mod n, alors I = $(zg^{-\alpha})^3$ mod n.

On peut également prouver, moyennant quelques hypothèses supplémentaires assez peu restrictives, qu'un malfaiteur utilisant toutes les techniques frauduleuses imaginables ne pourra obtenir une quelconque information sur l'accréditation du vérifié, et donc se faire ensuite passer pour lui.

En effet, supposons que ce malfaiteur interroge le vérifié (en se faisant passer pour le vérificateur) dans le but de lui extraire une information sur l'accréditation S :

a) face à un vérifié honnête, le fraudeur est obligé de poser les questions honnêtement. Pour satisfaire l'égalité h = $H_1(Y)$, après avoir reçu R = $g^{3\alpha}$, il doit fournir T et h tels que h = $H_1(T^\alpha)$ :

1. soit h n'est pas calculé à l'aide de $H_1$, alors, en admettant que $H_1$ peut être modélisée comme une fonction aléatoire, la probabilité de satisfaction est négligeable ;
2. soit h est le résultat de $H_1$ sur une valeur Z, alors, à moins d'avoir obtenu une collision de $H_1$, on a Y = Z. Dans ce cas, à partir de R = $g^{3\alpha}$, le vérificateur est capable de calculer $T^\beta$ = $g^{3\alpha\beta}$. D'après l'hypothèse de départ, il connaît $\beta$ tel que T = $g^{3\beta}$ mod n.

B) dans le cas où le secret S peut s'exprimer comme une puissance entière $g^v$ de g et où la valeur de m est proche d'un multiple de k, on peut simuler le vérifié sans pour autant connaître le secret S, ce qui signifie que les interactions que le fraudeur peut avoir avec le vérifié ne lui apprendront rien sur S : le simulateur effectue alors les opérations suivantes :

1. il choisit un nombre $\delta$ inférieur à m ;
2. il calcule z = $g^\delta$ mod n, $z^3$ = $g^{3\delta}$ mod n et R = $z^3I^{-1}$ soit $g^{3(\delta-v)}$ mod n ; (les nombres R et z ainsi construits suivent à peu près la même distribution que le R = $g^{3\alpha}$, et z=$g^{\alpha+v}$) ;
3. il envoie R au vérificateur, qui retourne T et h. Comme vu précédemment, le vérificateur est nécessairement honnête ; cela signifie qu'il connaît $\beta$ tel que T = $g^{3\beta}$ mod n; il peut donc avoir connaissance de ce $\beta$ ; (alors T = $g^{3\beta}$ mod n, Z = $R^\beta$ mod n et h = $H_1(Z)$) ;
4. il calcule Y = $R^\beta$ = Z mod n et H = $H_2(Y)$ ;
5. il envoie (z,H) au vérificateur.

Le procédé défini est donc sûr, même face à des attaques actives.

**Revendications**

**1.** Procédé cryptographique d'identification d'un support appelé "le vérifié", par des moyens appelés "le vérificateur", ce support et ces moyens étant équipés de moyens de calcul et de mémorisation appropriés, le vérifié et le vérificateur possédant en commun :

- un premier nombre entier n, produit de deux nombres premiers (p,q),
- un second nombre entier g compris entre 0 et n-1 et d'ordre k élevé ($g^k$=1 mod n),
- un paramètre m déterminant l'intervalle [0, m-1] dans lequel sont tirés les exposants aléatoires,
- une première et une seconde fonctions de hachage distinctes l'une de l'autre, notées $H_1$, $H_2$,

le vérifié possédant en outre un nombre secret S égal à la racine cubique modulo n d'un nombre I déduit de son identité, le nombre S vérifiant donc $S^3$=I mod n,

procédé dans lequel le vérifié et le vérificateur mettent en oeuvre leurs moyens de calcul et de mémorisation pour effectuer les opérations successives suivantes :

Phase A ;le vérifié :

Aa) tire au hasard un premier exposant $\alpha$ entier compris entre 0 et m-1,
Ab) calcule un nombre r égal à la puissance $\alpha$ du nombre g modulo n, soit :

$$r = g^{\alpha} \bmod n$$

Ac) calcule un nombre R égal au cube de r modulo n, soit :

$$R = r^3 \bmod n = g^{3\alpha} \bmod n,$$

Ad) transmet le nombre R au vérificateur,

Phase B ; le vérificateur :

Ba) tire au hasard un second exposant $\beta$ entier compris entre 0 et m-1,
Bb) calcule un nombre t égal à la puissance $\beta$ de g modulo n, soit :

$$t = g^{\beta} \bmod n,$$

Bc) calcule un nombre T égal au cube de t modulo n, soit

$$T = t^3 \bmod n = g^{3\beta} \bmod n,$$

Bd) calcule un nombre Z égal à la puissance $\beta$ de R modulo n, soit

$$Z = R^{\beta} \bmod n,$$

Be) applique la première fonction de hachage $H_1$ à Z pour obtenir un nombre h :

$$h = H_1(Z),$$

Bf) transmet au vérifié les nombres T et h,

Phase C ; le vérifié :

Ca) calcule un nombre Y égal à la puissance $\alpha$ du nombre T modulo n, soit :

$$Y = T^{\alpha} \bmod n,$$

Cb) applique au nombre Y la première fonction de hachage $H_1$ et obtient le résultat $H_1(Y)$ et vérifie si ce résultat est égal au nombre h reçu du vérificateur,
Cc) applique au nombre Y la seconde fonction de hachage ($H_2$) pour obtenir un résultat H :

$$H = H_2(Y),$$

Cd) calcule un nombre z égal au produit du nombre r par le secret S modulo n, soit : z = rS mod n,
Ce) transmet au vérificateur les nombres z et H,

Phase D ; le vérificateur :

Da) applique au nombre Z la seconde fonction de hachage ($H_2$) et vérifie si le résultat obtenu $H_2(Z)$ est égal au nombre H qu'il a reçu du vérifié,
Db) calcule, d'une part, le produit de R par I modulo n et, d'autre part, le cube de z modulo n et vérifie si les deux résultats sont égaux,

l'identification du vérifié par le vérificateur étant acquise si les trois vérifications Cb) Da) Db) sont avérées.

**2.** Procédé selon la revendication 1, dans lequel le support du vérifié est une carte à mémoire.

**Claims**

**1.** Cryptographic process for the identification of a support, called "the claimant", by means called "the verifier", said support and said means being equipped with appropriate calculation and storage means, the claimant and verifier having in common:

- a first integer n, which is the product of two prime numbers (p, q),
- a second integer g between 0 and n-1 and of high order k (the order k being defined as the smaller of the numbers such that $g^k = 1 \bmod n$),
- a parameter, determining the interval [0, m-1] in which are drawn the random exponents,
- a first and second, separate hash functions $H_1$, $H_2$ and which are independent of one another,

the claimant also having a secret number S equal to the modulo n cubic root of a number I deduced from his identity, so that the number S verifying: $S^3 = I \bmod n$,

wherein the claimant and verifier utilize their calculation and storage means for performing the following, successive operations:

phase A: the claimant:

Aa) draws at random a first integral exponent $\alpha$ between 0 and m-1,
Ab) calculates a number r equal to the power $\alpha$ of the modulo n number g, namely $r = g^\alpha \bmod n$,
Ac) calculates a number R equal to the cube of r modulo n, namely:

$$R = r^3 \bmod n = g^{3\alpha} \bmod n,$$

Ad) transmits the number R to the verifier;

phase B: the verifier:

Ba) draws at random a second integral exponent $\beta$ between 0 and m-1,
Bb) calculates a number t equal to the power $\beta$ of the go modulo n number, namely:

$$t = g^\beta \bmod n,$$

Bc) calculates a number T equal to the cube of t modulo n, namely:

$$T = t^3 \bmod n = g^{3\beta} \bmod n,$$

Bd) calculates a number Z equal to the power $\beta$ of R modulo n, namely:

$$Z = R \bmod n,$$

Be) applies the first hash function $H_1$ to Z for obtaining a number h: $h = H_1(Z)$,
Bf) transmits to the claimant the numbers T and h;

phase c: the claimant:

Ca) calculates a number Y equal to the power of the number T modulo n, namely:

$$Y = T \bmod n,$$

Cb) applies to the number Y the first hash function $H_1$ and obtains the result $H_1(Y)$ and verifies whether this result is equal to the number h received from the verifier,

Cc) applies to the number Y the second hash function $H_2$ for obtaining a result H: $H = H_2(Y)$,

Cd) calculates a number z equal to the product of the number r by the modulo n secret S, namely:

$$z = rS \bmod n,$$

Ce) transmits the numbers z and H to the verifier;

phase D: the verifier:

Da) applies to the number Z the second hash function $H_2$ and verifies whether the result obtained $H_2(Z)$ is equal to the number H received from the claimant,

Db) calculates, on the one hand, the product of R by modulo n I and, on the other hand, the cube of modulo n z and checks whether the two results are equal,

the identification of the claimant by the verifier being made if the three verifications Cb) Da) Db) are performed.

2. Process according to claim 1, wherein the support of the claimant is a smart card.

**Patentansprüche**

1. Kryptographieverfahren zur Identifizierung eines als "der Überprüfte" bezeichneten Trägers mittels einer als "der Überprüfer" bezeichneten Einrichtung, wobei dieser Träger und diese Einrichtung mit geeigneten Rechen- und Speichermitteln ausgestattet sind, wobei der Überprüfte und der Überprüfer gemeinsam besitzen:

- eine erste ganze Zahl n, die das Produkt von zwei Primzahlen (p, q) ist,
- eine zweite ganze Zahl g, die zwischen 0 und n-1 enthalten und von hoher Ordnung k ist ($g^k=1 \bmod n$),
- einen Parameter m, der das Intervall [0, m-1] bestimmt, aus dem die Zufallsexponenten gezogen werden,
- eine erste und eine zweite Hash-Funktion, die voneinander verschieden sind, genannt $H_1$, $H_2$, wobei der Überprüfte ferner eine Geheimzahl S gleich der Kubikwurzel modulo n einer Zahl I besitzt, die aus seiner Identität hergeleitet ist, womit die Zahl S somit die Beziehung $S^3=I \bmod n$ erfüllt,

bei welchem Verfahren der Überprüfte und der Überprüfer ihre Rechenund Speichermittel einsetzen, um die folgenden aufeinanderfolgenden Operationen durchzuführen:

Phase A; der Überprüfte:

Aa) zieht zufällig einen ersten ganzen Exponenten $\alpha$, der zwischen 0 und m-1 enthalten ist,

Ab) berechnet eine Zahl r gleich der Potenz $\alpha$ der Zahl g modulo n, d.h.:

$$r = g^{\alpha} \bmod n$$

Ac) berechnet eine Zahl R gleich der dritten Potenz von r modulo n, d.h.:

$$R = r^3 \bmod n = g^{3\alpha} \bmod n,$$

Ad) überträgt die Zahl R zum Überprüfer,

Phase B; der Überprüfer:

Ba) zieht zufällig einen zweiten ganzen Exponenten β, der zwischen 0 und m-1 enthalten ist,

Bb) berechnet eine Zahl t gleich der Potenz β von g modulo n, d.h.:

$$t = g^{\beta} \bmod n,$$

Bc) berechnet eine Zahl T gleich der dritten Potenz von t modulo n, d.h.

$$T = t^3 \bmod n = g^{3\beta} \bmod n,$$

Bd) berechnet eine Zahl Z gleich der Potenz β von R modulo n, d.h.

$$Z = R^{\beta} \bmod n,$$

Be) wendet die erste Hash-Funktion $H_1$ auf Z an, um eine Zahl h zu erhalten:

$$h = H_1 (Z),$$

Bf) überträgt die Zahlen T und h zum Überprüften,

Phase C; der Überprüfte:

Ca) berechnet eine Zahl Y gleich der Potenz α der Zahl T modulo n, d.h.:

$$Y = T^{\alpha} \bmod n,$$

Cb) wendet die erste Hash-Funktion $H_1$ auf die Zahl Y an und erhält das Ergebnis $H_1$ (Y) und überprüft, ob dieses Ergebnis gleich der vom Überprüfer empfangenen Zahl h ist,

Cc) wendet die zweite Hash-Funktion ($H_2$) auf die Zahl Y an, um ein Ergebnis H zu erhalten:

$$H = H_2 (Y),$$

Cd) berechnet eine Zahl z gleich dem Produkt der Zahl r mit dem Geheimen S modulo n, d.h.:

$$z = rS \bmod n,$$

Ce) überträgt die Zahlen z und H zum Überprüfer,

Phase D; der Überprüfer:

Da) wendet die zweite Hash-Funktion ($H_2$) auf die Zahl Z an und überprüft, ob das erhaltene Ergebnis $H_2$ (Z) gleich der Zahl H ist, die er vom Überprüften empfangen hat,

Db) berechnet einerseits das Produkt von R mit I modulo n, und andererseits die dritte Potenz von z modulo n, und überprüft, ob die beiden Ergebnisse gleich sind,

wobei die Identifizierung des Überprüften durch den Überprüfer erfolgt ist, wenn die drei Überprüfungen Cb), Da), Db) durchgeführt sind.

**2.** Verfahren nach Anspruch 1, bei dem der Träger des Überprüften eine Speicherkarte ist.